Europäisches Patentamt

European Patent Office

Office européen des brevets

(11) Veröffentlichungsnummer: **0 504 734 A2**

# EUROPÄISCHE PATENTANMELDUNG

(21) Anmeldenummer: **92104234.7**

(51) Int. Cl.5: **A22C 5/00**

(22) Anmeldetag: **12.03.92**

(30) Priorität: **22.03.91 DE 9103526 U**

(43) Veröffentlichungstag der Anmeldung:
**23.09.92 Patentblatt 92/39**

(84) Benannte Vertragsstaaten:
**BE DE DK FR GB NL**

(71) Anmelder: **Karl Schnell GmbH & Co.**
**Maschinenfabrik**
**Mühlstrasse 30**

**W-7065 Winterbach(DE)**

(72) Erfinder: **Schnell, Ersnt-Otto, Dr.**
**Gartenstrasse 6**
**W-7065 Winterbach(DE)**

(74) Vertreter: **KOHLER SCHMID + PARTNER**
**Patentanwälte**
**Ruppmannstrasse 27**
**W-7000 Stuttgart 80(DE)**

(54) Mischer für Nahrungsmittelprodukte, insbesondere Fleischprodukte.

(57) Die Erfindung betrifft einen Mischer für Nahrungsmittelprodukte, insbesondere Fleischprodukte, und weist einen in einen Mischraum (7) angeordneten Misch- und Fördersatz (3) zur Mischung und Förderung des Nahrungsmittelprodukts zu einem Förderendbereich (8) auf, an dem ein Mischproduktendauslauf (11) vorgesehen ist. Erfindungsgemäß ist am Mischproduktendauslauf (11) eine mit diesem in Verbindung stehende Portionier- und/oder Verdichtungsvorrichtung (10) einschließlich einer Kammer (12) zur Portionierung und/oder Verdichtung des den Mischproduktendauslauf (11) verlassenden Mischprodukts sowie eine das portionierte und/oder verdichtete Mischprodukt aus der Kammer fördernde Fördervorrichtung vorgesehen.

Fig. 1

Die Erfindung betrifft einen Mischer für Nahrungsmittelprodukte, insbesondere Fleichprodukte, und weist einen in einem Mischraum angeordneten Misch- und Fördersatz zur Mischung und Förderung des Nahrungsmittelprodukts zu einem Förderendbereich auf, an dem ein Mischproduktendauslauf vorgesehen ist.

Bei einem bekannten Mischer sind als Misch- und Fördersatz zwei gegenläufig drehende Wellen mit paddelartigen Armen parallel und schräg übereinander angeordnet. Die Paddelarme der unten liegenden Misch- und Fördereinheit fördern das Mischprodukt zu einem Endbereich eines mit zylindrischem Boden versehenen Mischraums, wo eine verschließ- und öffenbare Auslaufklappe vorgesehen ist. Das gemischte Nahrungsmittelprodukt wird durch die Förderbewegung der Paddel der unteren Misch- und Fördereinheit bei geöffneter Auslaßklappe unportioniert und unverdichtet aus dem Mischraum herausgefördert. Bei fließfähigen Nahrungsmittelprodukten ist eine Portionierung im wesentlichen nur durch eine entsprechende Verpakkung zu erreichen. Dagegen sind halbfeste oder feste Nahrungsmittelprodukte, wie z.B. Fleisch, Häksel und Wurstgemische portionier- und verdichtungsfähig, wobei beim Verdichtungsvorgang eventuelle flüssige Bestandteile herausgequetscht werden können.

Es ist deshalb wünschenswert, besonders für solche halbfesten oder festen Nahrungsmittelprodukte, die nicht fließfähig sind, am Mischproduktendauslauf eine Portioniervorrichtung zur Portionierung und/oder Verdichtung vorzusehen.

Dies wird erfindungsgemäß durch die in dem Schutzanspruch 1 gekennzeichneten Merkmale gelöst.

Dabei besteht der Grundgedanke der Erfindung darin, am Mischproduktendauslauf eine mit diesem in Verbindung stehende Portioniervorrichtung einschließlich einer Kammer zur Portionierung und/oder Verdichtung des den Mischproduktendauslauf verlassenden Mischprodukts sowie eine das Mischprodukt aus der Kammer fördernde Fördervorrichtung vorzu sehen. Da das den Mischproduktendauslauf verlassende Mischprodukt durch die erfindungsgemäß vorgeschlagenen Maßnahmen portioniert zur Weiterverarbeitung gelangt, können die Nahrungsmittelportionen durch einfache Fördereinrichtungen, wie z.B. ein Förderband oder eine Pipeline zu einer weiterverarbeitenden Prozeßstation gefördert werden. Ferner wird durch die Portionierung eine einfache Mengenbestimmung durch Zählen der Portionen ermöglicht. Das Zählen kann vorteilhaft mittels einer automatisch arbeitenden, lichtschrankengesteuerten Zähleinrichtung ausgeführt werden.

Bei einer bevorzugten Ausführung des erfindungsgemäßen Mischers ist ein Mischprodukteinlaß der Kammer gegen den Mischproduktendauslauf durch eine erste Verschlußvorrichtung wahlweise verschließ- und öffenbar. Vorteilhafterweise ist auch ein Auslaß der Kammer für das portionierte Produkt durch eine weitere Verschlußvorrichtung wahlweise schließ- und öffenbar. Zweckmäßigerweise werden sowohl die erste als die zweite Verschlußvorrichtung jeweils durch einen ersten und zweiten Hydraulikzylinder betätigt.

Bei einer bevorzugten Ausführung ist ein Kolben in der Kammer vorgesehen, welcher in funktionellem Zusammenwirken mit der ersten und zweiten Verschlußvorrichtung die Funktion der Fördereinrichtung ausübt. Vorzugsweise ist die Kammer kubisch in der Art einer Schublade mit einem die erste Verschlußvorrichtung bildenden, durch den ersten Hydraulikzylinder öffnen- und schließbaren Deckel und mit einer die zweite Verschlußvorrichtung bildenden Seitenwand ausgebildet, die durch den zweiten Hydraulikzylinder heb- und senkbar und dadurch schließ- bzw. öffenbar ist.

Bei dieser Ausführungsform ist der Mischproduktendauslauf am Boden des Mischraums an dessen Endbereich angeordnet, wobei der Bodenbereich zylindrisch und koaxial zur Antriebswelle des Misch- und Fördersatzes ausgebildet ist. Bei einer anderen Ausführungsform sind an einer Welle des Misch-und Fördersatzes Förderschnecken vorgesehen, die die in den Mischraum eingegebenen Komponenten in zueinander entgegengesetzten Richtungen zur Mitte des Mischraums fördern, wobei der Mischproduktendauslauf in diesem Fall etwa in der Mitte des ebenfalls zylindrisch ausgebildeten Bodens im untersten Bereich des Mischraums angeordnet ist.

Da feste bzw. halbfeste Nahrungsmittelprodukte, wie Fleisch und Wurstkomponentenmischungen auch durch ihr Eigengewicht nach unten drücken, ist es vorteilhaft, die Portioniervorrichtung direkt unterhalb des Mischproduktendauslaufs anzuordnen, so daß das zu portionierende Mischprodukt durch sein Eigengewicht in die Portioniervorrichtung gedrückt wird. Eine weitere vorteilhafte Ausführungsform sieht vor, daß die Fördervorrichtung das portionierte Mischprodukt im wesentlichen horizontal aus der Kammer fördert.

Vor dem Mischproduktendauslauf kann auch innerhalb des Mischraums eine, das Fördern des Mischprodukts zum Endauslauf unterstützende Hilfsfördereinrichtung vorgesehen sein. Diese Hilfsfördereinrichtung kann auch schon eine das Mischprodukt vor dem Endauslauf verdichtende Funktion haben.

Die Erfindung läßt sich besonders vorteilhaft zur Mischung und Portionierung halbfester bis fester Nahrungsmittelprodukte, insbesondere Fleischprodukte, verwenden.

Die Erfindung wird im folgenden in mehreren Ausführungsbeispielen anhand der Zeichnung näher beschrieben. Es zeigen:

Die Fign.

1 bis 3  schematisch jeweils eine erste, zweite und dritte Ausführungsart des erfindungsgemäßen Mischers; und

die Fign.

4A und 4B  schematisch Möglichkeiten einer Weiterförderung portionierter Mischprodukte.

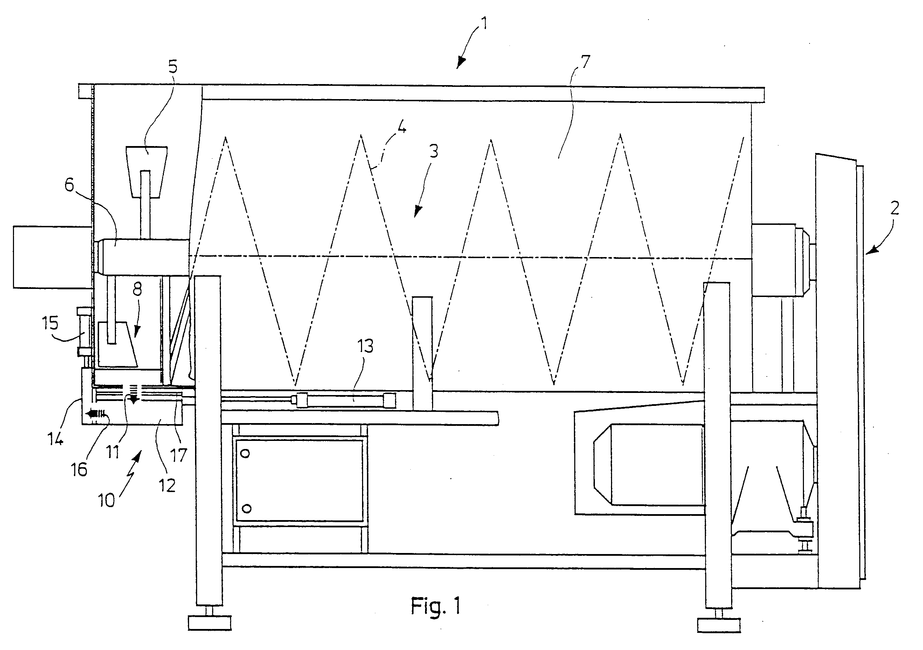

Der in Fig. 1 dargestellte Mischer 1 weist einen in einem durch einen Behälter gebildeten Mischraum 7 drehbaren Misch- und Fördersatz 3 auf, der an einer Welle 6 angebracht ist und durch einen Drehantrieb 2 zusammen mit dieser Welle 6 in Drehung versetzt wird.

Die Misch- und Förderelemente des Misch- und Fördersatzes 3 können jede bekannte Bauart haben. Insbesondere besteht der Misch- und Fördersatz aus einer Förderschnecke 4, die das Mischgut zu einem Mischproduktendauslauf 11 hin fördert. An der Antriebswelle 6 sind außerdem Misch- und gegebenenfalls Schneidschaufeln angebracht. Am Endbereich 8 des Mischraums 7 und am Ende der Förderschnecke 4 ist eine aus Förderpaddeln 5 bestehende Hilfsfördereinrichtung vorgesehen, die das fertige Mischprodukt in den Endauslauf 11 drückt. Der Endauslauf 11 ist im Bereich des zylinderförmigen Bodens des Mischraums 7 an dessen unterster Position vorgesehen. Unterhalb des Mischproduktendauslaufs 11 ist eine Portioniervorrichtung 10 angebracht, deren Einlaß über eine Verschlußvorrichtung 17 mit dem Mischproduktendauslauf 11 in Verbindung steht.

Die Portioniervorrichtung 10 weist eine Kammer 12 auf, die eine der verdichteten Mischproduktportion entsprechende Form hat. In der in Fig. 1 dargestellten Ausführungsform hat die Kammer 12 eine kubische Form. Am linken Ende der Kammer 12 ist ein Materialauslaß 16 vorgesehen, der durch eine zweite Verschlußvorrichtung 14 wahlweise schließ- und öffenbar ist.

Die Portioniervorrichtung 10 funktioniert wie folgt:

Wenn am Mischproduktendauslauf 11 genügend fertig gemischtes Nahrungsmittelgemisch vorhanden ist, wird die erste Verschlußvorrichtung 17 durch einen ersten Hydraulikzylinder 13 geöffnet und die Kammer 12 füllt sich mit dem fertig gemischten Nahrungsmittelgemisch. Nach einer bestimmten Zeit wird durch den ersten Hydraulikzylinder 13 die erste Verschlußvorrichtung geschlossen. Anschließend öffnet ein zweiter Hydraulikzylinder 15 die zweite Verschlußvorrichtung 14, d.h. die linke Wand der Portioniervorrichtung und eine in Fig. 1 nicht dargestellte Fördereinrichtung schiebt das portionierte Mischprodukt nach links aus der Kammer 12 heraus, von wo es weiterbefördert werden kann. Natürlich kann das anschließende Herausschieben des Materials aus der Kammer auch durch ein und dasselbe Mittel, z.B. einen Stempel ausgeführt werden, der durch einen weiteren Hydraulikzylinder (der in Fig. 1 nicht gezeigt ist) betätigt wird.

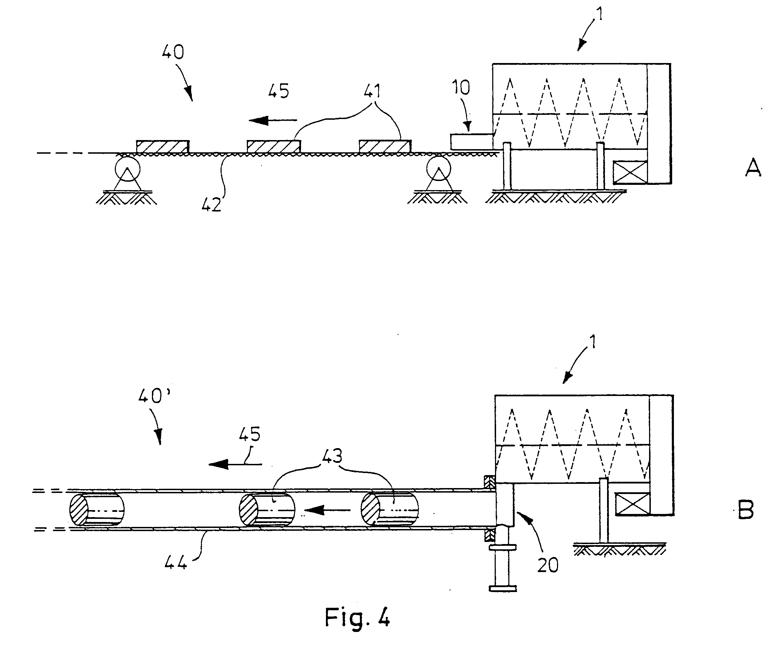

Die durch die in Fig. 1 dargestellte Ausführungsart aus der Kammer geförderten Nahrungsmittelportionen sind aufgrund der Gestalt der Kammer 12 quaderförmig und gelangen z.B. auf eine Transportvorrichtung 40, die z.B. ein Transportband 42 sein kann, welches die Nahrungsmittelquader 41 in Richtung des Pfeils 45 transportiert (Fig. 4A). Diese quaderförmige Portionierung gestattet es, die Menge des aus dem Mischer 1 geförderten Mischprodukts durch Zählen leicht zu bestimmen, da jeder Quader 41 im wesentlichen die gleiche Größe und im wesentlichen gleiche Masse hat.

Das Öffnen und Schließen der ersten und zweiten Verschlußvorrichtung durch den ersten und zweiten Hydraulikzylinder sowie das Herausschieben des portionierten Mischprodukts aus der Kammer 12 durch die in Fig. 1 nicht dargestellten Fördereinrichtung werden durch eine ebenfalls nicht dargestellte Steuereinrichtung gesteuert und synchronisiert. Dabei können bekannte Sensoren, wie Endschalter und/oder Lichtschranken als Erfassungs- und Steuerorgane eingesetzt werden.

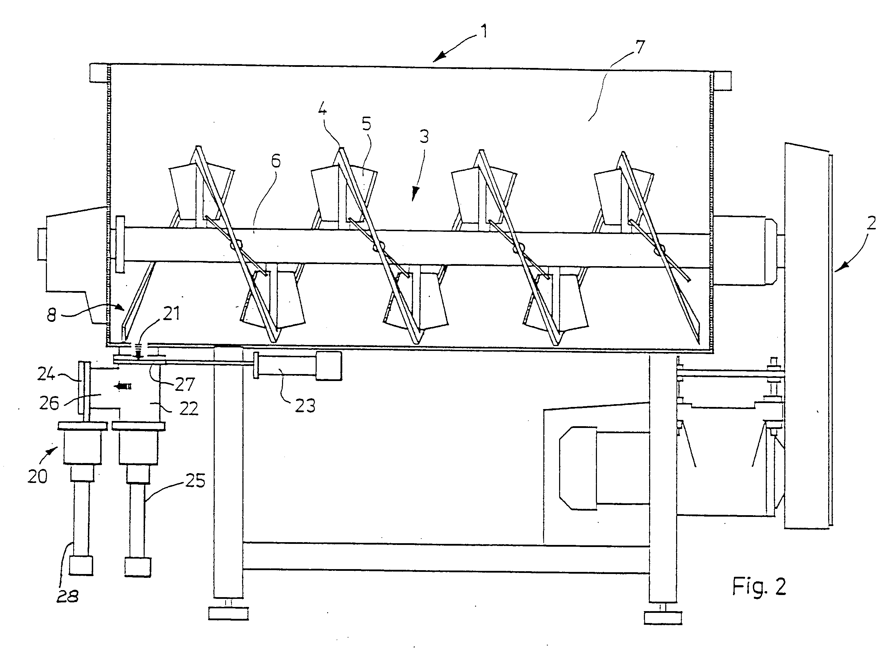

In Fig. 2 ist eine zweite Ausführungsart der Erfindung dargestellt. Der Mischproduktendauslauf 21 befindet sich im wesentlichen an der gleichen Stelle, d.h. am Boden und im Endbereich 8 einer zylindrischen Bodenwanne des Mischraums 7. Unterhalb des Mischproduktendauslaufs 21 ist ein Ventil 20 angeordnet, welches genauso wie bei der in Fig. 1 dargestellten Ausführungsart einen durch eine erste Verschlußvorrichtung 27 gegen den Mischproduktendauslauf 21 verschließbaren Materialeinlaß und einen Auslaß 26 aufweist, der durch eine zweite Verschlußvorrichtung 24 verschließbar ist. Die erste und zweite Verschlußvorrichtung 27 und 24 sind durch entsprechende Hydraulikzylinder 23 und 28, ähnlich wie in der Ausführung gemäß Fig. 1, öffen- und verschließbar. Anstelle der waagrecht arbeitenden Verschlußvorrichtung 27 kann auch eine von unten wirkende Verschlußvorrichtung 25 Verwendung finden.

Wenn sich das Mischprodukt in der Kammer 22 befindet, wird durch den Hydraulikzylinder 28 die zweite Verschlußvorrichtung geöffnet und das Mischprodukt nach links aus der Kammer 22 herausgedrückt. Selbstverständlich bleibt die erste Verschlußvorrichtung 27 während des Hinausdrückens der Portion aus der Kammer 22 geschlossen.

Gemäß Fig. 4B kann die die Nahrungsmittelportion weiter befördernde Transportvorrichtung 40' eine Pipeline 44 mit bevorzugt kreisförmigem Rohrquerschnitt sein. In diesem Fall hat auch der Materialauslaß der Kammer 22 bevorzugt einen kreisrunden Querschnitt. Das durch die Pipeline 44 geförderte Mischprodukt 43 wird in Richtung des Pfeils 45 gefördert, wobei die Portionierung durch eine nicht gezeigte nachgeschaltete Pumpe erfolgt.

Damit die Vorschubbewegung der zylinderförmigen Mischproduktportionen 43 möglichst wenig durch die Innenwand der Röhre 44 etwa durch anhaftende Reste des Mischprodukts gebremst wird, weist diese Innenwand bevorzugt eine Teflonverkleidung auf. Auch die in Fig. 4B dargestellten Mischproduktportionen 43 können, nachdem sie aus der Kammer 22 gemäß Fig. 2 herausbefördert wurden, in ihrer Menge durch einfache Erfassungsorgane, beispielsweise eine Lichtschranke, erfaßt und gezählt werden, wodurch sich die Gesamtmenge des den Mischer 1 verlassenden Mischprodukts erfassen läßt.

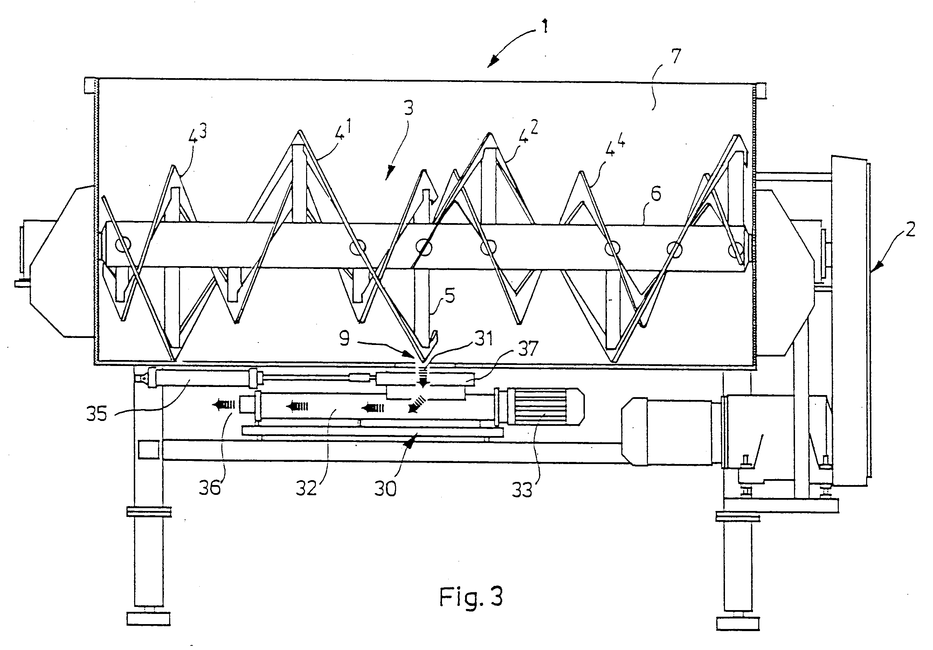

Fig. 3 zeigt eine weitere Ausführungsart, bei der ein Mischproduktendauslauf 31 am Boden einer den Mischraumboden bildenden zylinderförmigen Wanne in einer mittleren Position vorgesehen ist.

Anders als bei den in den Fign. 1 und 2 dargestellten Misch- und Fördersätzen weist der in Fig. 3 dargestellte einander gegenläufige Förderschnecken $4^1$, $4^2$, $4^3$ und $4^4$ auf, die das Nahrungsmittelmischprodukt zur Mitte des Mischraums 7 hin fördern. Unterhalb des Mischproduktendauslaufs 31 ist eine Portioniervorrichtung 30 mit einer Kammer 32 vorgesehen.

Am Mischproduktendauslauf 31 ist eine Verschlußvorrichtung 37 angeordnet, welche durch einen Hydraulikzylinder 35 betätigt wird. Die in der Kammer 32 befindliche Nahrungsmittelportion wird durch die Wirkung einer Fördereinrichtung, die z.B. eine Druckluftpumpe 33 sein kann, nach links aus einer Auslaßöffnung 36 der Kammer 32 herausbefördert. Die Portionierung des Mischprodukts in der Kammer 32 erfolgt dabei durch Ein- und Ausschalten der Pumpe 33. Die aus der Auslaßöffnung herausgestoßene Portion kann z.B. durch die in Fig. 4B gezeigte Pipeline 44 weiterbefördert werden.

Die Ausführungsarten, wie sie anhand der Fign. 2 und 3 beschrieben wurden, benötigen selbstverständlich auch eine nicht dargestellte Steuereinrichtung zur Steuerung der Öffnungs- und Schließbewegung der ersten bzw. zweiten Verschlußvorrichtung und des Pumpbetriebs der Förderpumpe 25 bzw. 33 in zeitlicher Abhängigkeit von der Öffnungs- und Schließbewegung der ersten bzw. zweiten Verschlußvorrichtung.

Die in den Fign. 1 bis 3 gezeigten Misch- und Fördersätze sind lediglich beispielhaft aufzufassen. Statt Einwellen-Misch- und Fördersätzen können auch Zweiwellen-Misch- und Fördersätze vorgesehen sein. Ferner können die Misch- und Fördersätze mit zusätzlichen Schneideblättern ausgerüstet sein.

Die Hydraulikantriebe der ersten und zweiten Verschlußvorrichtung können selbstverständlich durch andere geeignete Antriebe ersetzt werden.

**Patentansprüche**

1. Mischer für Nahrungsmittelprodukte, insbesondere Fleischprodukte, mit einem in einem Mischraum (7) angeordneten Misch- und Fördersatz (3) zur Mischung und Förderung des Nahrungsmittelprodukts zu einem Förderendbereich (8; 9), an dem ein Mischproduktendauslauf (11; 21; 31) vorgesehen ist, gekennzeichnet durch eine am Mischproduktendauslauf (11; 21; 31) angeordnete und mit diesem verbundene Portioniervorrichtung (10; 20; 30) einschließlich einer Kammer (12; 22; 32) zur Portionierung und/oder Verdichtung des den Mischproduktendauslauf verlassenden Mischprodukts, und eine das Mischprodukt aus der Kammer (12; 22; 32) fördernde Fördervorrichtung (13; 23; 33).

2. Mischer nach Anspruch 1, dadurch gekennzeichnet, daß ein Mischprodukt-Einlaß der Kammer (12; 22; 32) gegen den Mischproduktendauslauf (11; 21; 31) durch eine erste Verschlußvorrichtung (17; 27; 37) wahlweise in eine Schließ- und Offenstellung bringbar ist.

3. Mischer nach Anspruch 1 oder 2, dadurch gekennzeichnet, daß ein Materialauslaß (16; 26) der Kammer (12; 22; 32) durch eine zweite Verschlußvorrichtung (14; 24) wahlweise in eine Schließ- und Offenstellung bringbar ist.

4. Mischer nach Anspruch 2 oder 3, dadurch gekennzeichnet, daß die erste und zweite Verschlußvorrichtung (17; 27; 37 und 14; 24) jeweils durch einen ersten und zweiten Hydraulikzylinder (13, 15; 23, 28) in ihre Schließ- und Offenstellung bringbar sind.

5. Mischer nach einem der vorangehenden Ansprüche, dadurch gekennzeichnet, daß ein Verdichtungskolben in der Kammer vorgesehen ist, welcher in funktionellem Zusammenwirken mit der ersten und zweiten Verschlußvorrichtung ein Verdichten des in der Kammer befindlichen Mischprodukts ausführt und gleichzeitig die Funktion der Fördervorrichtung erfüllt.

6. Mischer nach einem der vorangehenden Ansprüche, dadurch gekennzeichnet, daß der Mischraum (7) einen im wesentlichen zylindrischen Boden koaxial zur Welle des Misch- und Fördersatzes (3) hat und der Mischproduktendauslauf (11; 21) am Boden des Mischraums (7) neben einer Mischraumstirnwand angeordnet ist.

7. Mischer nach einem der Ansprüche 1 bis 5, dadurch gekennzeichnet, daß der Mischraum (7) einen zylindrischen Boden hat, der koaxial zur Antriebswelle (6) des Misch- und Fördersatzes (3) verläuft und der Mischproduktendauslauf (31) am Boden des Mischraums (7) etwa in dessen Mitte angeordnet ist.

8. Mischer nach einem der vorangehenden Ansprüche, dadurch gekennzeichnet, daß die Portioniervorrichtung (10; 20; 30) unterhalb des Mischproduktendauslaufs (11; 21; 31) so angeordnet ist, daß das Mischprodukt auch durch sein Eigengewicht in die Portioniervorrichtung (10; 20; 30) gedrückt wird.

9. Mischer nach einem der vorangehenden Ansprüche, dadurch gekennzeichnet, daß die Fördervorrichtung (13; 23; 33) das portionierte Mischprodukt im wesentlichen horizontal aus der Kammer (12; 22; 32) fördert.

Fig. 1

Fig. 2

Fig.3

Fig. 4